(19) Europäisches Patentamt
European Patent Office
Office européen des brevets

(11) Numéro de publication: **0 191 706 B1**

# (12) FASCICULE DE BREVET EUROPEEN

(45) Date de publication du fascicule du brevet: **24.08.88**

(51) Int. Cl.⁴: **C 08 G 73/12**

(21) Numéro de dépôt: **86420030.8**

(22) Date de dépôt: **30.01.86**

## (54) Compositions thermodurcissables à base de prépolymère à groupements imides stables au stockage et procédé de préparation.

(30) Priorité: **08.02.85 FR 8502008**

(43) Date de publication de la demande: **20.08.86 Bulletin 86/34**

(45) Mention de la délivrance du brevet: **24.08.88 Bulletin 88/34**

(84) Etats contractants désignés: **BE CH DE GB IT LI LU NL SE**

(56) Documents cités:
**EP - A - 0 022 049**
**US - A - 3 763 081**

(73) Titulaire: **RHONE-POULENC CHIMIE, 25, quai Paul Doumer, F-92408 Courbevoie Cédex (FR)**

(72) Inventeur: **Dien, René, 39, avenue Gilbert Fabre, F-69390 Millery (FR)**
Inventeur: **Poulain, Guy, 5, rue du Renard, F-93460 Gournay sur Marne (FR)**

(74) Mandataire: **Vignally, Noel et al, RHONE-POULENC INTERSERVICES Service Brevets Chimie Centre de Recherches de Saint-Fons B.P. 62, F-69192 Saint-Fons Cedex (FR)**

EP 0 191 706 B1

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet des compositions durcissables à base de prépolymères à groupements imides et siloxaniques et de divers adjuvants permettant l'obtention de compositions stables au stockage, filmogènes à des températures comprises entre 40 et 90°C, collantes à température ambiante et souples.

De très nombreuses compositions ont été décrites dans la littérature présentant chacune des avantages et des inconvénients.

Dans le brevet français 2 460 308 on a décrit des compositions thermodurcissables ontenues à partir de bis-maléimides et de silanes hydroxylés. Ces compositions ne présentent pas de propriétés de souplesse suffisantes pour certaines des applications envisagées. De plus en couche mince, elles ne présentent pas de collant.

Dans FR-A-2 553 780, publiée le 26. 4. 1985 (& EP-A-141 765, publiée le 15. 5. 1985) ont été décrites des compositions stables au stockage filmogènes à des températures comprises entre 40 et 90°C et de préférence entre 60 et 80°C, collantes à température ambiante et souples.

Par composition stable au stockage on entend dans le présent texte une composition qui reste homogène (absence de cristallisation d'un constituant) et qui n'évolue pas dans le temps.

Par composition filmogène on entend une composition qui est fluide entre 40 et 90°C et peut-être déposée par enduction ou autre méthode classique de dépôt sur un tissu ou un non tissé, un matelas de fibres, un papier transfert, les fibres constituant ces différents supports étant recouvertes de façon continue, soit directement, soit après transfert.

Par composition collante à température ambiante on entend une composition qui déposée sur le substrat et ramenée à température ambiante permet à ce substrat d'être positionné par simple pression et de tenir en contact dans n'importe quelle position.

Par composition souple on entend une composition qui déposée sur le substrat n'augmente pas la rigidité dudit substrat, permettant à celui-ci d'épouser les formes des pièces à obtenir qui peuvent être par exemple des pièces de révolution comportant des parties convexes et concaves et ayant des arrondis et/ou des arêtes.

FR-A-2 553 780 a plus précisément pour objet des compositions thermodurcissables caractérisées en ce qu'elles sont constituées essentiellement par:

A) un prépolymère obtenu par réaction entre 50°C et 300°C de:

a) un bis-imide ou une association de plusieurs bis-imides ou une association de bis-imide et de N-cyclohexylmaléimide, le ou les bis-imides étant choisis parmi ceux de formule (1):

```
YC-CO             CO-CY
  ||    >N-L-N<     ||          (1)
YC-CO             CO-CY
```

où Y représente H, $CH_3$ et le symbole L représente un radical divalent choisi dans le groupe constitué par les radicaux cyclohexylènes; phénylènes; méthyl-4-phénylène-1,3; méthyl-2 phénylène-1,3; méthyl-5-phénylène-1,3; diéthyl-2,5 méthyl-3 phénylène-1,4 et les radicaux de formule:

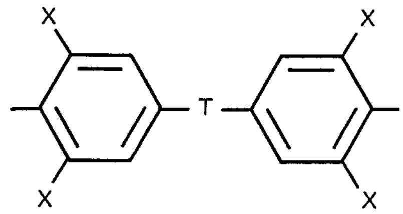

(2)

dans laquelle T représente un groupement:

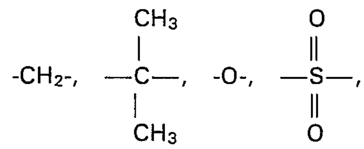

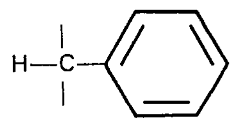 , 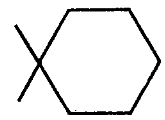 ,

ou

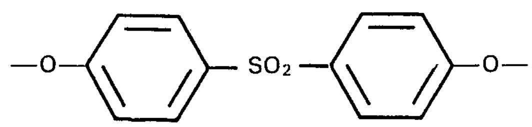

(3)

et X représente un atome d'hydrogène, un radical méthyle, éthyle ou isopropyle;

b) un composé organosilicique comportant dans sa molécule au moins un groupement hydroxylé lié à un atome de silicium;

B) un triallylisocyanurate ou

un ester acrylique d'un composé siloxanique diphénylé de formule générale (4):

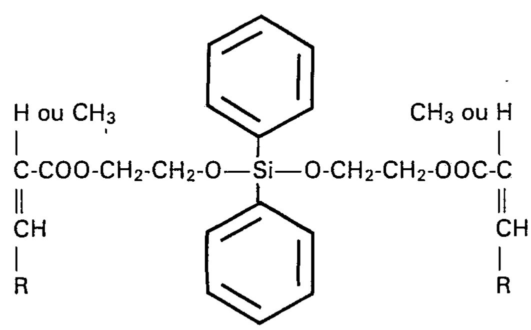

(4)

R étant un atome d'hydrogène, un radical méthyle ou éthyle;

C) un dérivé imidazole.

La présente invention constitue un perfectionnement de l'invention selon FR-A-2 553 780.

Plus précisément elle se définit comme de nouvelles compositions thermodurcissables caractérisées en ce qu'elles sont constituées essentiellement par:

A) un prépolymère obtenu par réaction entre 50°C et 300°C de:

a) un bis-imide ou une associsation de plusieurs bis-imides ou une association de bis-imide et de

mono-maléimide, le ou les bis-imides étant choisis parmi ceux de formule (1):

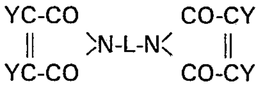
(1)

où Y représente H, $CH_3$ et le symbole L représente un radical divalent choisi dans le groupe constitué par les radicaux cyclohexylènes; phénylènes; méthyl-4 phénylène-1,3; méthyl-2 phénylène-1,3; méthyl-5 phénylène-1,3; diéthyl-2,5 méthyl-3 phénylène-1,4 et les radicaux de formule (2):

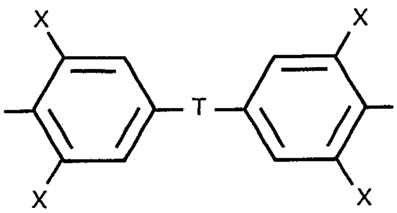
(2)

dans laquelle T représente un lien valentiel simple ou un groupement:

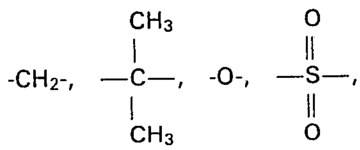

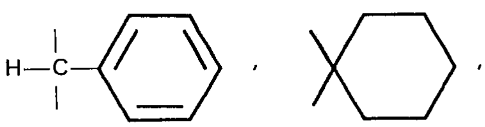

ou

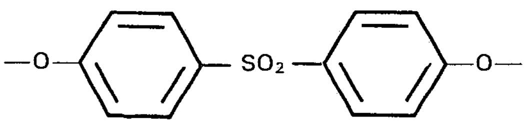
(3)

et X représente un atome d'hydrogène, un radical méthyle, éthyle ou isopropyle;

b) un composé organosilicique comportant dans sa molécule au moins un groupement hydroxylé lié à un atome de silicium;

B) un triallylisocyanurate ou

un ester acrylique d'un composé siloxanique diphényle de formule générale (4):

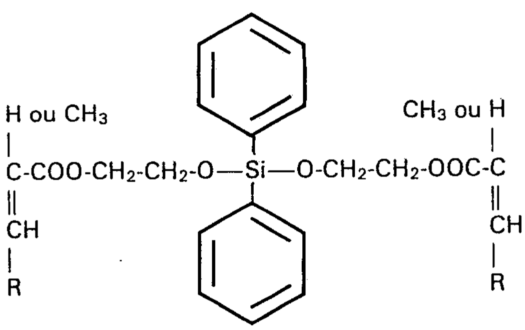
(4)

R étant un atome d'hydrogène, un radical méthyle ou éthyle;

C) un dérivé imidazole;

D) une N,N',N''-tris (hydroxyalkyl) hexahydrotriazine.

Le bis-maléimide de formule (1) peut être choisi par exemple parmi:

- le N,N' métaphénylène bis-maléimide,
- le N,N' paraphénylène bis-maléimide,
- le N,N'-4,4' diphénylméthane bis-maléimide,
- le N,N'-4,4' diphényléther bis-maléimide,
- le N,N'-4,4' diphénylsulfone bis-maléimide,
- le N,N' cyclohexylène-1,4 bis-maléimide,
- le N,N'-4,4' (diphenyl-1,1 cyclohexylidène)bis-maléimide,
- le N,N'-4,4' (diphényl-2,2 propane)bis-maléimide,
- le N,N'-4,4' triphénylméthane-bis-maléimide,
- le N,N'-méhyl-6 phénylène-1,3 bis-maléimide.

Ces bis-maléimides peuvent être préparés selon les procédés décrits dans le brevet américain n° 3 018 290 et le brevet britannique n° 1 137 290.

Quand on associe un monomaléimide au bis-maléimide de formule (1), le nombre de fonctions maléimide apportées par le mono maléimide ne représente pas plus de 30% du nombre de fonction maléimide engagées dans la réaction.

Comme exemples spécifiques des monomaléimides utilisables dans les compositions selon la présente invention on peut indiquer: le N-phénylmaléimide, le N-cyclohexylmaléimide, le N-phénylméthylmaléimide, le N-(méthyl-4 phényl) maléimide, le N-(nitro-4 phényl) maléimide, le N-phénoxy-4 phényl) maléimide, le N-(phénylamino-4 phényl) maléimide, le -(phénoxycarbonil-4 phényl) maléimide, le maléimido-1 acétoxysuccinimido-4 benzène, le maléimido-1 acétoxysuccinimido-4' diphénylméthane, le maléimido-4 acétoxysuccinimido-4'diphényléther, le maléimido-4-acétamido-4' diphényléther, le maléimido-4 acétamido-4' diphénylméthane, le N-(phénylcarbonyl-4 phényl)-maléimide.

Ces monomaléimides peuvent être préparés selon le procédé décrit dans le brevet américain n° 2 444 536 pour la préparation du N-arylmaléimide.

Les composés organosiliciques hydroxylés qui entrent dans le cadre de l'invention sont des composés connus répondant à la formule générale (5) suivante:

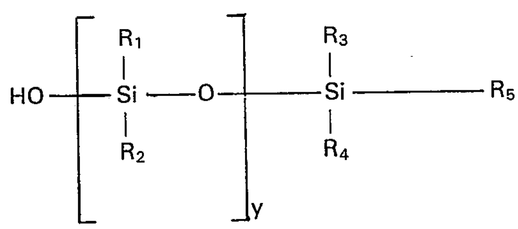
(5)

dans laquelle $R_1$, $R_2$, $R_3$, $R_4$ et $R_5$, identiques ou différents, représentent:

— un groupement hydroxyle ou un groupement du type $-OR_6$ dans laquelle $R_6$ peut être un radical alkyle, linéaire ou ramifié, ayant de 1 à 6 atomes de carbone ou un radical phényle;

— un atome d'hydrogène;

— un radical alkyle, linéaire ou ramifié, ayant de 1 à 6 atomes de carbone et pouvant être éventuellement substitué par un ou plusieurs atomes de chlore ou de fluor ou par un groupement -CN;

— un radical alcényle, linéaire ou ramifié, ayant de 2 à 6 atomes de carbone;

— un radical phényle, éventuellement substitué par un ou plusieurs radicaux alkyles et/ou alcoxyles ayant de 1 à 4 atomes de carbone, ou par un ou plusieurs atomes de chlore; et y est un nombre entier ou fractionnaire, de 0 à 1000.

Pour un composé organosilicique défini de formule (5), y est en réalité toujours un nombre entier, mais comme il s'agit en l'occurrence de composés à structure polymérique (lorsque y est supérieur à 1), on a rarement un seul composé, mais le plus souvent un mélange de composés de même structure chimique, qui diffèrent par le nombre d'unités récurrentes de leur molécule; cela conduit à une valeur moyenne de y, qui peut être entière ou fractionnaire.

On peut caractériser les composés organosiliciques hydroxylés du type précité par le rapport du poids des groupements hydroxyle qu'ils possèdent au poids total de leur molécule.

Les composés organosiliciques, auxquels on fait appel de préférence pour exécuter la présente invention, sont les composés précités pour lesquels le rapport pondéral des groupements hydroxyle dans la molécule est au moins égal à 0,05% et de préférence à 0,1%.

Parmi les composés organosiliciques appartenant à ce groupe préféré, ceux qui conviennent tout particulièrement bien sont les composés de formule (5) dans laquelle:

— $R_1$, $R_2$, $R_3$ et $R_4$, identiques ou différents, représentent un radical alkyle, linéaire ou ramifié, ayant de 1 à 6 atomes de carbone ou un radical alcényle, linéaire ou ramifié, ayant de 2 à 6 atomes de carbone ou un radical phényle;

— $R_5$ représente un groupement hydroxyle;

— y est un nombre, entier ou fractionnaire, de 0 à 250.

Il s'agit donc de silane-diols lorsque y est égal à 0 ou bien de polysiloxane-diols lorsque y est différent de 0.

Pour leur préparation on peut se reporter à l'ouvrage de W. NOLL «Chemistry and Technology of Silicones» (traduction anglaise de L'Edition allemande de 1968) édité par Academic Press de New-York.

Les composés organosiliciques qui conviennent tout particulièrement bien sont choisi dans le groupe constitué par:

— le diéthylsilane-diol
— le diphénylsilane-diol
— le méthylphénylsilane-diol
— le tétraméthyl-1,1,3,3 disiloxane-diol-1,3,
— le diméthyl-1,1 diphényl-3,3 disiloxane-diol-1,3
— le diméthyl-1,3 diphényl-1,3 disiloxane-diol-1,3
— l'hexaméthyl-1,1,3,3,5,5 trisiloxane-diol-1,5
— l'octaméthyl-1,1,3,3,5,5, 7,7 tétrasiloxane-diol-1,9
— le décaméhyl-1,1,3,3,5,5,7,7,9,9, pentasiloxane-diol-1,9
— le dodécaméthyl-1,1,3,3,5,5,7,7,9,9,11,11 hexasiloxane-diol-1,11
— le pentaméthyl-1,3,5,7,9 pentaméthyl-1,3,5,-7,9 pentasiloxane-diol-1,9

ainsi que leurs homologues supérieurs correspondants.

Les composés organosiliciques hydroxylés convenant tout particulièrement bien peuvent également être des mélanges de deux ou plusieurs des composés précités. C'est ainsi que l'on peut utiliser par commodité des huiles ou résines polysiloxaniques hydroxylées du commerce. Ce sont en particulier des huiles polyméthylpolysiloxaniques- α, ω dihydroxylées ayant de 0,2 à 0,3% en poids de groupement hydroxyle (huile de Rhône-Poulenc 48 V 500), ou 10 à 12% en poids de groupements hydroxyle (huile de Rhône-Poulenc 48 V 50) ou des huiles ou résines méthylphénylpolysiloxaniques- α, ω dihydroxylées ayant 4,5% à 5% en poids de groupements hydroxyle (huile 50606 de Rhône-Poulenc) ou de 7,5 à 8,5% en poids de groupements hydroxyle (résine 50305 de Rhône-Poulenc); ces huiles ou résines du commerce sont données à titre d'exemple, mais il en existe d'autre pouvant convenir tout aussi bien.

Dans les prépolymères A) préparés à partir d'un bis-imide (1) et d'un composé organosilicique hydroxylé (5), on choisit les quantités de réactifs de manière à avoir un rapport pondéral:

$$\frac{\text{composé organosilicique hydroxylé}}{\text{bis-imide + composé organosilicique hydroxylé}}$$

compris entre 10% et 40%.

Une autre façon de définir les proportions relatives de bis-imide et de composé organosilicique hydroxylé consiste à indiquer le rapport entre le nombre de fonction hydroxyle du composé organosilicique et le nombre de groupements imide du bis-imide. Ce rapport se situe, de manière préférentielle, entre 0,01 et 2.

L'ester acrylique de formule (4) est un ester acrylique ou méthacrylique qui peut être substitué ou non sur le radical acrylique par un radical méthyle ou éthyle.

On préférera le diméthacrylate de diphényldiéthoxysilane. Cet ester sera mis en œuvre à un taux compris entre 8 et 20% en poids par rapport à la composition totale.

Le triallylisocyanate sera aussi utilisé à un taux compris entre 8 et 20% en poids par rapport à la composition totale.

Le dérivé imidazole C répond à la formule générale (6):

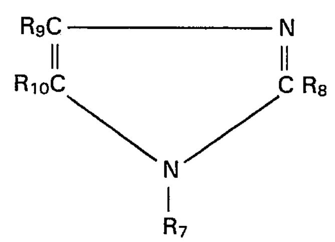

(6)

dans laquelle $R_7$, $R_8$, $R_9$ et $R_{10}$, identiques ou différents, représentent: un atome d'hydrogène, un radical alkyle ou alcoxy ayant de 1 à 20 atomes de

carbone, un radical vinyle, un radical phényle, un groupement nitro, $R_9$ pouvant former avec $R_{10}$ et les atomes de carbone auxquels sont liés ces radicaux un cycle unique comme par exemple un cycle benzénique, $R_7$ pouvant également représenter un groupement carbonyle lié à un 2ème cycle imidazole.

Comme exemples spécifiques de dérivés imidazole, on peut citer, en particulier, l'imidazole ou glyoxaline, le méthyl-1 imidazole, le méthyl-2 imidazole, le diméthyl-1,2 imidazole, le vinyl-1 imidazole, le vinyl-1 méthyl-2 imidazole, le benzimidazole, le carbonyldiimidazole.

Le dérivé imidazole est utilisé en quantités catalytiques. Selon la nature du dérivé imidazole et selon la vitesse de polymérisation souhaitée au stade de la mise en œuvre, on utilise le dérivé imidazole à un taux compris entre 0,02 et 1% en poids par rapport à la composition totale.

De préférence on utilise un taux d'imidazole de 0,05 à 0,5% en poids par rapport à la composition totale.

La N,N',N''-tri(hydroxyalkyl) hexahydrotriazine D) utilisée dans les compositions thermodurcissables selon l'invention est plus particulièrement la N,N',N''-tris(hydroxyéthyl) hexahydrotriazine-1,3,-5, la N,N',N''-tris (hydroxypropyl) hexahydrotriazine-1,3,5 et la N,N',N''-tris(hydroxybutyl) hexahydrotriazine-1,3,5.

On emploiera préférentiellement la N',N',N''-tris (hydroxyéthyl) hexahydro triazine-1,3,5 disponible dans le commerce.

La quantité de composé triazinique D) mis en œuvre dans les compositions thermodurcissables selon l'invention représente habituellement de 0,2% à 2% en poids de la composition totale. De préférence on utilise un taux de composé triazinique D) de 0,5% à 1% en poids.

Finalement dans les compositions thermodurcissables selon la présente invention, on utilise généralemen des quantités des différents constituants telles que l'on ait en poids par rapport au poids total desdits constituants:

- de 60% à 80% de bis-maléimide ou de mélange bis-maléimide + monomaléimide;
- de 8% à 40% de composé organosilicique de formule (5);
- de 8% à 20% de triallylisocyanurate ou d'ester acrylique de formule (4);
- de 0,02% à 1% et de préférence de 0,05% à 0,5% de dérivé imidazole;
- de 0,2% à 2% et de préférence de 0,5% à 1% de composé triazinique D).

Divers adjuvants peuvent être incorporés dans les compositions selon l'invention. Ces adjuvants habituellement utilisés et bien connus de l'homme de l'art peuvent être par exemple des stabilisants ou des inhibiteurs de dégradation, des lubrifiants ou des agents de démoulage, des colorants ou des pigments, des charges pulvérulentes ou en particules comme des silicates, des carbonates, le kaolin, la craie, le quartz pulvérisé, le mica ou des microbilles de verre...

On peut aussi incorporer des adjuvants modifiant la structure physique du produit obtenu comme par exemple des agents porogènes ou des renforçants fibreux: fibrilles de carbone, de polyimide, de polyamides aromatiques, whiskers, etc....

Le procédé de fabrication est tel que la résine prête à l'emploi présente suffisamment de souplesse et de collant en couche mince. En outre pour obtenir un matériau homogène après stratification, les réactions génératrices de composés très volatils aux températures de cuisson doivent être peu importantes. Dans ce but, lorsque l'on part d'un silanediol il est souhaitable de réaliser d'abord la plus grande partie de la réaction d'oligomérisation donnant de l'eau comme sous-produit; cette eau peut être éliminée plus facilement en cours de fabrication de la résine.

Tout d'abord on réalise un mélange intime des composés à groupement maléimides et du composé organosilicique hydroxylé. Pour éviter une homopolymérisation prématurée des maléimides qui conduirait à une résine trop visqueuse, le mélange maléimide + composé organosilicique hydroxylé est fondu en absence de catalyseur à une température au plus égale à la température de fusion du maléimide le plus difficile à liquéfier. Si l'on part d'un composé organosilicique riche en groupements hydroxyle, le mélange est maintenu fondu de façon à réaliser une partie de l'oligomérisation du silanediol. De préférence on chauffera ce composé à environ 150°C jusqu'à ce que 40% environ des groupements hydroxyle initiaux aient disparu lors de l'oligomérisation de ce composé. On pourra, à titre de variante, réaliser cette oligomérisation avant introduction des composés à groupement maléimides.

Le dérivé imidazole C) et le composé triazinique D) sont ajoutés au mélange bien agité de façon à permettre leur dispersion rapide. Lorsque le catalyseur est particulièrement actif, pour éviter son encapsulation dans le réseau polymérique qu'il engendre, il est souhaitable de l'ajouter dans un diluant compatible avec le milieu réactionnel. On a trouvé qu'il pouvait être intéressant d'utiliser comme diluant tout ou partie du triallylisocyanurate mis en œuvre dans la composition.

Le mélange est dégazé pour éliminer les volatils contre-indiqués pour la préparation des stratifiés. Le cas échéant, on rajoute alors l'ester acrylique de composé siloxanique diphénylé ou le triallylisocyanurate si ce dérivé n'a pas été utilisé comme diluant. La résine est coulée immédiatement après homogénéisation.

Les compositions thermodurcissables selon l'invention présentent par rapport aux compositions de l'art antérieur des caractéristiques mécaniques en flexion plus élevées.

Elles possèdent également une pégosité suffisante pour les applications telles que les stratifiés et les matériaux composites.

Les compositions peuvent être mises en œuvre par des opérations de moulage ou d'imprégnation. Elles peuvent être utilisées pour la réalisation de revêtements, de collages, de stratifiés et matériaux composites renforcés. Le matériau de renforcement peut être sous forme de nappes tissées ou non tissées, d'éléments unidirectionnels ou de fibres coupées naturelles ou synthétiques telles que les filaments ou fibres de verre, de bore, de carbone, de tungstène, de silicium, de polyamide-imides ou polyamides aromatiques. Les compositions présentent un intérêt tout particulier pour l'obtention d'articles intermédiaires préimprégnés sans solvant. L'imprégnation du matériau fibreux peut être effectuée par application des techniques usuelles telles que l'immersion, l'enduction au racle ou au rideau ou l'imprégnation par transfert. Le film transférable et les articles préimprégnés peuvent être utilisés directement ou bien être emmagasinés en vue d'un emploi ultérieur; ils conservent remarquablement leurs propriétés au cours d'un stockage au froid entre 0 et 10°C.

Les matériaux imprégnés sont utilisables pour la réalisation de pièces ayant des formes et des fonctions variées dans de nombreuses industries comme par exemple dans l'aéronautique. Ces pièces qui peuvent être des pièces de révolution sont obtenues par placage de plusieurs couches de préimprégnés sur une forme ou un support.

On effectue ensuite la réticulation dans les conditions technologiques habituelles relatives aux matériaux composites et en particulier à des températures comprises entre 100 et 300°C.

On peut utiliser aussi les préimprégnés comme renforts ou moyens de réparation de pièces détériorées.

Mais il est possible de concevoir des pièces selon les techniques de l'enroulement filamentaire avec ou sans support, ou de l'injection moulage ou de la pultrusion.

On peut ainsi obtenir des produits conformés à haute résistance mécanique et thermique.

Les exemples suivants sont donnés à titre illustratif de l'invention:

*Exemples 1 et 2 et Essais comparatifs 1A et 2A*

Un réacteur en verre, muni d'un agitateur en acier inoxydable de type ancre et d'une tubulure latérale permettant le départ des produits volatils, est préchauffé dans un bain à 160°C.

On charge en 4 minutes un mélange pulvérulent comprenant:

- 58,8 g de N,N'-4,4' diphénylméthane bis-maléimide,
- 39,2 g de N,N'-1,3 méthyl-4 phénylène bismaléimide,
- 42,0 g de diphénylsilanediol.

Après 7 minutes d'agitation la masse réactionnelle est limpide.

On maintient la température à 150°C pendant 20 minutes afin que se réalise l'oligomérisation partielle du diphénylsilanediol.

On abaisse ensuite la température à 120°C en 10 minutes.

On dégaze alors la masse réactionnelle pour éliminer l'eau formée; cette opération dure 4 minutes pendant lesquelles la pression est ramenée progressivement à environ 65 Pascals.

On ajoute ensuite selon les exemples ou essais comparatifs les solutions suivantes:

| | Exemple 1 | Essai comparatif 1A | Exemple 2 | Essai comparatif 2A |
|---|---|---|---|---|
| imidazole | 0,10 g | 0,10 g | 0,17 g | 0,17 g |
| N'N',N'' tri(hydroxyéthyl) hexahydrotriazine-1,3,5 (THET) | 0,99 g | 0 | 0,17 g | 0 |
| triallylisocyanurate (TAIC) | 24,65 g | 24,65 g | 24,65 g | 24,65 g |

On agite pendant 3 minutes, puis on dégaze pendant 10 minutes à 120°C en ramenant progressivement la pression à 65 Pascals environ.

On coule ensuite la masse réactionnelle ainsi obtenue dans des moules parallélépipédiques préchauffés à 100°C, afin d'obtenir des plaques de 140 × 100 × 4 mm.

Les caractéristiques suivantes des résines ainsi préparées sont mesurés:

- pégosité et souplesse (test qualitatif) en film mince sur papier transfert;
- viscosité dynamique à 90°C (en Pascal × seconde: Pa × s)
- viscosité dynamique après 2 heures à 90°C (en Pa x s)
- temps de gel à 160°C.

Les plaques de résines obtenues précédemment sont soumises à une cuisson dans les conditions suivantes:

- 1 heure entre 100°C et 150°C (montée progressive de la température)
- 30 minutes à 150°C
- 40 minutes entre 150°C et 200°C (montée progressive de la température)
- 2 heures à 200°C
- 30 minutes entre 200°C et 250°C (montée progressive de la température)
- 15 heures 30 minutes à 250°C
- 1 heure entre 250°C et 100°C (refroidissement progressif),

puis elles sont démoulées.

Dans les plaques de résine cuite on découpe des

éprouvettes de 30 × 7 × 4 mm sur lesquelles on mesure la résistance (RF) et le module (MF) en flexion (les éprouvettes sont disposées sur des appuis distants de 25,4 mm) à 20°C et 250°C.

Enfin on effectue les mesures de résistance (RF) et de module (MF) a flexion à 20°C et 250°C sur des éprouvettes de mêmes dimensions conditionnées pendant 1000 heures à 250°C.

Le tableau ci-après rassemble les principales caratéristiques des exemples 1 et 2 et des essais comparatifs 1A et 2A et les résultats des mesures effectuées sur les differentes résines préparées.

| Essais | Imidazole % en poids dans la composition | composé triazinique % en poids dans la composition | viscosité en Pa × s à 90°C temps 0 | viscosité en Pa × s Après 2 h à 90°C | Temps de gel à 160°C | * Collant | Résine après cuisson Mesures à 20°C RF | Résine après cuisson Mesures à 20°C MF | Résine après cuisson Mesures à 250°C RF | Résine après cuisson Mesures à 250°C MF | Résine après 1000 h à 250°C Mesures à 20°C RF | Résine après 1000 h à 250°C Mesures à 20°C MF | Résine après 1000 h à 250°C Mesures à 250°C RF | Résine après 1000 h à 250°C Mesures à 250°C MF |
|---|---|---|---|---|---|---|---|---|---|---|---|---|---|---|
| Exemple 1 | 0,06 | 0,6 | 1,24 | 1,7 | 47 min | + + | 79,0 | 1900 | 44,2 | 1079 | 92,0 | 2620 | 51,8 | 1520 |
| Essai 1A | 0,06 | 0 | 0,74 | 0,85 | 54 min | + | 56,0 | 1750 | 38,2 | 1100 | 51,9 | 2600 | 13,8 | 1420 |
| Exemple 2 | 0,10 | 0,10 | 1,65 | 2,48 | 30 min | + + | 86,0 | 1900 | 47,0 | 1060 | 89,0 | 2430 | 46,7 | 1520 |
| Essai 2A | 0,10 | 0 | 0,83 | 1,2 | 30 min | + | 74,0 | 1687 | 42,0 | 1130 | 81,0 | 2150 | 45,7 | 1430 |

* + bon collant
+ + collant amélioré

La résistance en flexion (RF) et le module en flexion (MF) sont exprimés en méga Pascals (MPa).

**Revendications**

1. Compositions thermodurcissables caractérisées en ce qu'elles sont constituées essentiellement par:

A) un prépolymère obtenu par réaction entre 50°C et 300°C de:

a) un bis-imide ou une association de plusieurs bis-imides ou une association de bis-imide et de mono-maléimide, le ou les bis-imides étant choisis parmi ceux de formule (1):

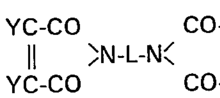
(1)

où Y représente H, $CH_3$ et le symbole L représente un radical divalent choisi dans le groupe constitué par les radicaux cyclohexylènes; phénylènes; methyl-4 phénylène-1,3; méthyl-2 phénylène-1,3; méthyl-5 phénylène-1,3; diéthyl-2,5 méthyl-3 phénylène-1,4 et les radicaux de formule (2):

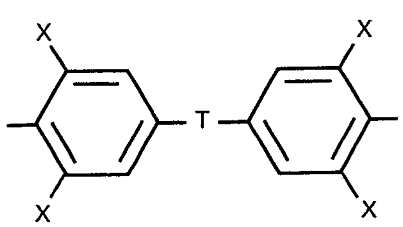
(2)

dans laquelle T représente un lien valentiel simple ou un groupement:

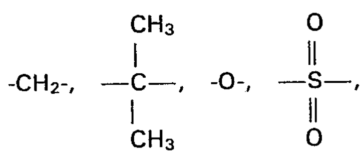

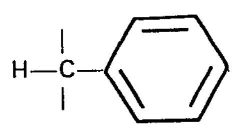
,
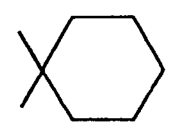
,

ou

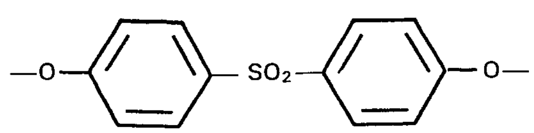
(3)

et X représente un atome d'hydrogène, un radical méthyle, éthyle ou isopropyle;

b) un composé organosilicique comportant dans sa molécule au moins un groupement hydroxylé lié à un atome de silicium;

B) un triallylisocyanate ou

un ester acrylique d'un composé siloxanique diphénylé de formule générale (4):

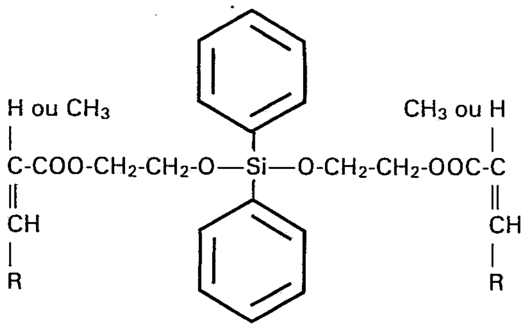

(4)

R étant un atome d'hydrogène, un radical méthyle ou éthyle;

C) un dérivé imidazole;

D) une N,N',N''-tris (hydroxyalkyl) hexahydrotriazine.

2. Compositions selon la revendication 1, caractérisées en ce que le bis-maléimide de formule (1) est choisi parmi:

— le N,N' métaphénylène bis-maléimide,
— le N,N' paraphénylène bis-maléimide,
— le N,N'-4,4' diphénylméthane bis-maléimide,
— le N,N'-4,4' diphényléther bis-maléimide,
— le N,N'-4,4' diphénylsulfone bis-maléimide,
— le N,N' cyclohexylène-1,4 bis-maléimide,
— le N,N'-4,4' (diphényl-1,1 cyclohexylidène)bismaléimide,
— le N,N'-4,4' (diphényl-2,2 propane)bis-maléimide,
— le N,N'-4,4' triphénylméthane-bis-maléimide,
— le N,N'-méthyle-6-phénylène-1,3 bis-maléimide.

3. Composition selon l'une des revendications 1 ou 2 caractérisées en ce que le composé organosilicique répond à la formule générale (5):

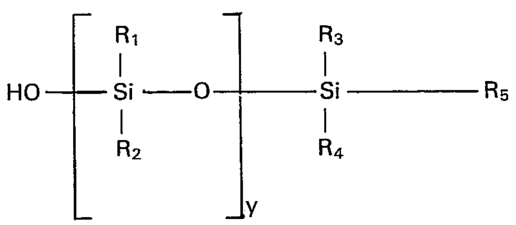

(5)

dans laquelle $R_1$, $R_2$, $R_3$, $R_4$ et $R_5$, identiques ou différents, représentent:

— un groupement hydroxyle ou un groupement du type $-OR_6$ dans laquelle $R_6$ peut être un radical alkyle, linéaire ou ramifié, ayant de 1 à 6 atomes de carbone ou un radical phényle;

— un atome dhydrogène;

— un radical alkyle, linéaire ou ramifié, ayant de 1 à 6 atomes de carbone et pouvant être éventuellement substitué par un ou plusieurs atomes de chlore ou de fluor ou par un groupement -CN;

— un radical alcényle, linéaire ou ramifié, ayant de 2 à 6 atomes de carbone;

— un radical phényle, éventuellement substitué par un ou plusieurs radicaux alkyles et/ou alcoxyles ayant de 1 à 4 atomes de carbone, ou par un ou plusieurs atomes de chlore; et y est un nombre entier ou fractionnaire, de 0 à 1000.

4. Composition selon l'une des revendications 1 à 3, caractérisées en ce que le dérivé imidazole répond à la formule (6):

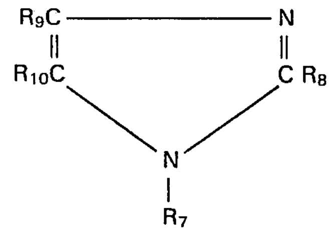

(6)

dans laquelle $R_7$, $R_8$, $R_9$ et $R_{10}$, identiques ou différents, représentent: un atome d'hydrogène, un radical alkyle ou alcoxy ayant de 1 à 20 atomes de carbone, un radical vinyle, un radical phényle, un groupement nitro, $R_9$ pouvant former avec $R_{10}$ et les atomes de carbone auxquels sont liés ces radicaux un cycle unique par exemple un cycle benzénique, $R_7$ pouvant également représenter un groupement carbonyle lié à un 2ème cycle imidazole.

5. Compositions selon l'une des revendications 1 à 4, caractérisées en ce que la N,N',N''-tris(hydroxyalkyl) hexahydrotriazine est choisi parmi:

— la N,N',N''-tris(hydroxyéthyl) hexahydrotriazine-1,3,5,
— la N,N',N''-tris (hydroxypropyl) hexahydrotriazine-1,3,5,
— la N,N',N''-tris(hydroxybutyl) hexahydrotriazine-1,3,5.

6. Composition selon l'une des revendications 1 à 5, caractérisées en ce que le bis-maléimide utilisé est le N,N''-4,4'-diphénylméthane bismaléimide, le N,N'-1,3-méthyl-4 phénylène bis-maléimide, le N,N'-1,3 méthyl-2 phénylène bis-maléimide ou leurs mélanges.

7. Composition selon l'une des revendications 1 à 6, caractérisées en ce que le composé organosilicique est le diphénylsilanediol.

8. Composition selon l'une des revendications 1 à 7, caractérisées en ce que le dérivé imidazole est choisi dans le groupe comprenant l'imidazole, le méthyl-1 imidazole, le méthyl-2 imidazole, le diméthyl-1,2 imidazole, le vinyl-1 imidazole, le vinyl-1 méthyl-2 imidazole et le benzimidazole, le carbonyl diimidazole.

9. Composition selon l'une des revendications 1 à 8, caractérisées en ce qu'elles comportent en poids par rapport au poids total de leurs constituants:

— de 60% à 80% de bis-maléimide ou de mélange bis maéimide + monomaléimide;
— de 8% à 40% de composé organosilicique de formule (5);
— de 8% à 20% de triallylisocyanurate ou d'ester acrylique de formule (4);
— de 0,02% à 1% et de préférence de 0,05% à 0,5% de dérivé imidazole;
— de 0,2 à 2% et de préférence de 0,5% à 1% de composé triazinique D).

10. Procédé de préparation de composition selon la revendication 1, caractérisé en ce que l'on réalise

un mélange intime des composés à groupements maléimides et du composé organosilicique hydroxylé, que l'on fond le mélange à une température au plus égale à la température de fusion du maléimide le plus difficile à liquéfier, puis que l'on ajoute le dérivé imidazole et le composé triazinique préalablement dissous dans un diluant, sous forte agitation, puis que l'on dégaze rapidement et enfin que l'on ajoute le triallylisocyanurate ou l'ester acrylique de composé siloxanique diphénylé et que l'on coule la résine immédiatement après homogénéisation.

11. Procédé selon la revendication 10, caractérisé en ce qu'antérieurement au mélange intime des composés à groupements maléimides et du composé organosilicique hydroxylé, on chauffe ce dernier produit à 150°C environ jusqu'à ce que 40% au moins des groupements hydroxyle initiaux aient disparu.

12. Procédé selon la revendication 10, caractérisé en ce que le dérivé imidazole et le composé triazinique sont dissous dans le triallylisocyanurate.

13. Produits conformés obtenus à partir de compositions selon les revendications 1 à 9.

**Patentansprüche**

1. Wärmehärtbare Zusammensetzungen, dadurch gekennzeichnet, dass sie im wesentlichen bestehen aus:

A) einem Präpolymeren, erhalten durch Reaktion zwischen 50°C und 300°C von

a) einem Bis-imid oder einer Zusammenlagerung von mehreren Bis-imiden oder einer Zusammenlagerung von Bis-imid und Mono-maleimid, wobei das oder die Bis-imide ausgewählt sind unter solchen der Formel (1)

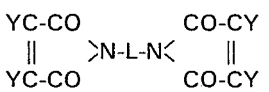 (1)

wo Y bedeutet H, $CH_3$ und das Symbol L einen zweiwertigen Rest bedeutet, ausgewählt aus der Gruppe, bestehend aus den Resten Cyclohexylen, Phenylen, 4-Methylphenylen-1,3, 2-Methyl-phenylen-1,3, 5-Methyl-phenylen-1,3, 2,5-Diethyl-3-methylphenylen-1,4 und den Resten der Formel (2):

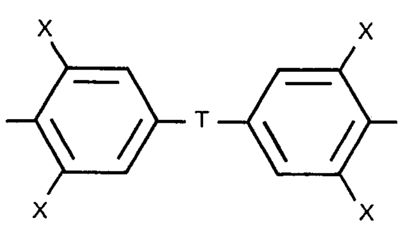 (2)

worin T eine einfache Valenzbindung bedeutet oder eine Gruppe

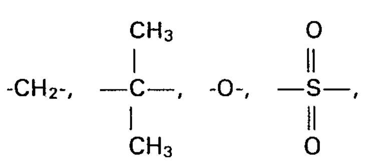

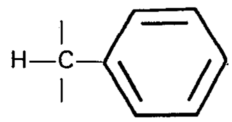 , 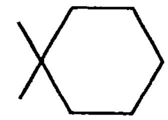 ,

oder

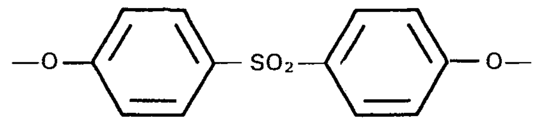 (3)

und X ein Wasserstoffatom, einen Methyl-, Ethyl- oder Isopropylrest darstellt;

b) einer Organosilicium-Verbindung, die in ihrem Molekül mindestens eine Hydroxylgruppe, gebunden an ein Siliciumatom, enthält;

B) einem Triallylisocyanurat oder einem Acrylester einer diphenylsiloxan-Verbindung der allgemeinen Formel (4):

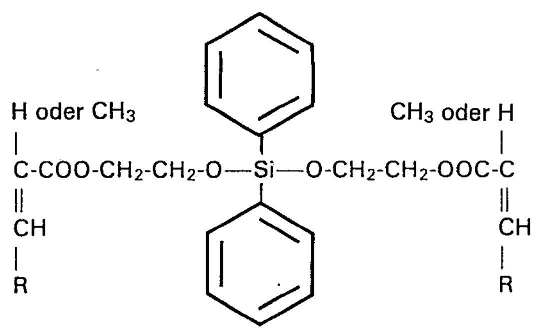 (4)

wobei R ein Wasserstoffatom, ein Methyl- oder Ethylrest ist;

C) einem Imidazol-Derivat ;

D) einem N,N',N''-Tris-(hydroxyalkyl)-hexahydrotriazin.

2. Zusammensetzungen gemäss Anspruch 1, dadurch gekennzeichnet, dass das Bis-maleimid der Formel (1) ausgewählt ist unter:

— N,N'-Metaphenylen-bis-maleimid,
— N,N'-Paraphenylen-bis-maleimid,
— N,N'-4,4'-Diphenylmethan-bis-maleimid,
— N,N'-4,4'-Dihenylether-bis-maleimid,
— N,N'-4,4'-Diphenylsulfon-bis-maleimid,
— N,N'-Cyclohexylen-1,4-bis-maleimid,
— N,N'-4,4'-(1,1-Diphenyl-cyclohexyliden)-bis-maleimid,
— N,N'-4,4'-(2,2-Diphenyl-propan)- bis-maleimid,
— N,N'-4,4'-Triphenylmethan-bis-maleimid,
— N,N'-6-Nethyl-phenylen-1,3-bis-maleimid.

3. Zusammensetzungen gemäss einem der Ansprüche 1 oder 2, dadurch gekennzeichnet, dass die Organosilicium-Verbindung der allgemeinen Formel (5)

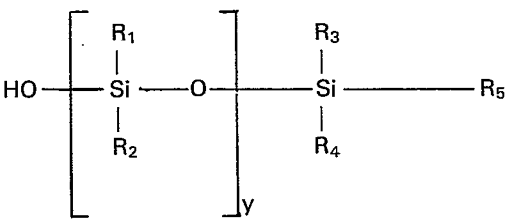 (5)

entspricht, worin $R_1$, $R_2$, $R_3$, $R_4$ und $R_5$, die identisch oder verschieden sind, bedeuten:

— eine Hydroxylgruppe oder eine Gruppe vom Typ $-OR_6$, worin $R_6$ ein gerader oder verzweigter Alkylrest mit 1 bis 6 Kohlenstoffatomen oder ein Phenylrest sein kann;
— ein Wasserstoffatom;
— einen geraden oder verzweigten Alkyrest mit 1 bis 6 Kohlenstoffatomen, der gegebenenfalls durch ein oder mehrere Chlor- oder Fluoratome oder eine Gruppe -CN substituiert sein kann;
— einen geraden oder verzweigten Alkenylrest mit 2 bis 6 Kohlenstoffatomen;
— einen Phenylrest, gegebenenfalls substituiert durch einen oder mehrere Alkyl- und/oder Alkoxyreste mit 1 bis 4 Kohlenstoffatomen oder durch ein oder mehrere Chloratome;

und y ist eine ganze oder Bruchzahl von 0 bis 1000.

4. Zusammensetzungen gemäss einem der Ansprüche 1 bis 3, dadurch gekennzeichnet, dass das Imidazol-Derivat der Formel (6)

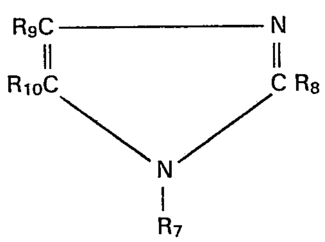 (6)

entspricht, worin $R_7$, $R_8$, $R_9$ und $R_{10}$, die identisch oder verschieden sind, bedeuten: ein Wasserstoffatom, einen Alkyl- oder Alkoxyrest mit 1 bis 20 Kohlenstoffatomen, einen Vinylrest, einen Phenylrest, eine Nitrogruppe, wobei $R_9$ mit $R_{10}$ und den Kohlenstoffatomen, an die diese Reste gebunden sind, einen einzigen Ring bilden können, wie beispielsweise einen Benzolring, wobei $R_7$ auch eine Carbonylgruppe, gebunden an einen zweiten Imidazolring, darstellen kann.

5. Zusammensetzungen gemäss einem der Ansprüche 1 bis 4, dadurch gekennzeichnet, dass das N,N',N''-Tris-(hydroxyalkyl)-hexahydrotriazin ausgewählt ist unter:

— N,N',N''-Tris-(hydroxyethyl)-hexahydro-1,3,5-triazin,
— N,N',N''-Tris-(hydroxypropyl)-hexahydro-1,3,5-triazin,
— N,N',N''-Tris-(hydroxybutyl)-hexahydro-1,3,5-triazin.

6. Zusammensetzungen gemäss einem der Ansprüche 1 bis 5, dadurch gekennzeichnet, dass das verwendete Bis-maleimid das N,N'-4,4'-Diphenylmethan-bis-maleimid, das N,N'-4-Methylphenylen-1,3-bis-maleimid, das N,N'-2-Methylphenylen-1,3-bis-maleimid oder deren Gemische ist.

7. Zusammensetzungen gemäss einem der Ansprüche 1 bis 6, dadurch gekennzeichnet, dass die Organosilicium-Verbindung das Diphenylsilandiol ist.

8. Zusammensetzungen gemäss einem der Ansprüche 1 bis 7, dadurch gekennzeichnet, dass das Imidazol-Derivat ausgewählt ist aus der Gruppe, umfassend das Imidazol, das 1-Methylimidazol, das 2-Methylimidazol, das 1,2-Dimethylimidazol, das 1-Vinylimidazol, das 1-Vinyl-2-methylimidazol und das Benzimidazol und Carbonyldiimidazol.

9. Zusammensetzungen gemäss einem der Ansprüche 1 bis 8, dadurch gekennzeichnet, dass sie gewichtsmässig in bezug auf das Gesamtgewicht ihrer Bestandteile enthalten:

— von 60 bis 80% Bis-maleimid oder ein Gemisch Bis-maleimid + Monomaleimid;
— von 8 bis 40% Organosilicium-Verbindung der Formel (5);
— von 8 bis 20% Triallylisocyanurat oder Acrylester der Formel (4);
— von 0,02 bis 1% und vorzugsweise von 0,05 bis 0,5% Imidazol-Derivat;
— von 0,2 bis 2% und vorzugsweise von 0,5 bis 1% Triazin-Verbindung (D).

10. Verfahren zur Herstellung der Zusammensetzung gemäss Anspruch 1, dadurch gekennzeichnet, dass man ein inniges Gemisch der Verbindungen mit Maleimid-Gruppen und der hydroxylierten Organosilicium-Verbindung herstellt, dass man das Gemisch bei einer Temperatur höchstens gleich der Schmelztemperatur desjenigen Maleimids, das am schwersten zu verflüssigen ist, schmilzt, dass man dann das Imidazol-Derivat und die vorher in einem Verdünnungsmittel gelöste Triazin-Verbindung unter starkem Rühren zusetzt, dass man rasch entgast und dass man schliesslich das Triallylisocyanurat oder den Acrylester der Diphenylsiloxan-Verbindung zusetzt und dass man das Harz sofort nach Homogenisierung giesst.

11. Verfahren gemäss Anspruch 10, dadurch gekennzeichnet, dass man vor dem innigen Vermischen der Verbindungen mit Maleimid-Gruppen und der hydroxylierten Organosilicium-Verbindung dieses letztere Produkt auf etwa 150°C erhitzt, bis wenigstens 40% der ursprünglichen Hydroxylgruppen verschwunden sind.

12. Verfahren gemäss Anspruch 10, dadurch gekennzeichnet, dass das Imidazol-Derivat und die Triazin-Verbindung in dem Triallylisocyanurat gelöst werden.

13. Geformte Produkte, erhalten aus den Zusammensetzungen gemäss den Ansprüchen 1 bis 9.

## Claims

1. Thermosetting compositions characterised in that they consist essentially of:

A) a prepolymer obtained by reacting together between 50°C and 300°C:

a) a bisimide or a combination of several bisimides or a combination of a bisimide and a monomaleimide, the bisimide(s) being chosen from those of formula (1):

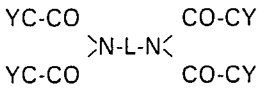

(1)

where Y denotes H or $CH_3$ and the symbol L denotes a divalent radical chosen from the group consisting of cyclohexylene, phenylene, 4-methyl-1,3-phenylene, 2-methyl-1,3-phenylene, 5-methyl-1,3-phenylene, 2,5-diethyl-3-methyl-1,4-phenylene radicals and radicals of formula (2):

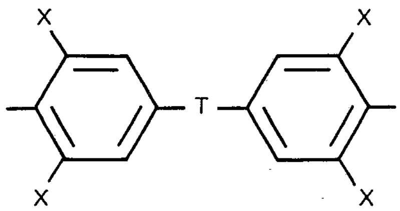

(2)

in which T denotes a single valency bond or a group:

$-CH_2-$, 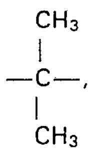, -O-, 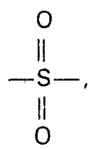,

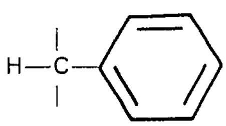 , 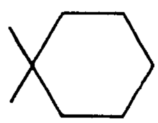 ,

or

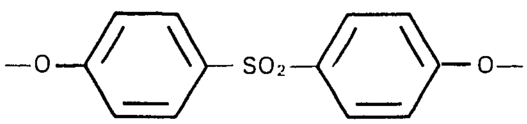 (3)

and X denotes a hydrogen atom, or a methyl, ethyl or isopropyl radical;

b) an organosilicon compound incorporating in its molecule at least one hydroxyl group bonded to a silicon atom;

B) a triallyl isocyanurate or an acrylic ester of a diphenylated siloxane compound of general formula (4):

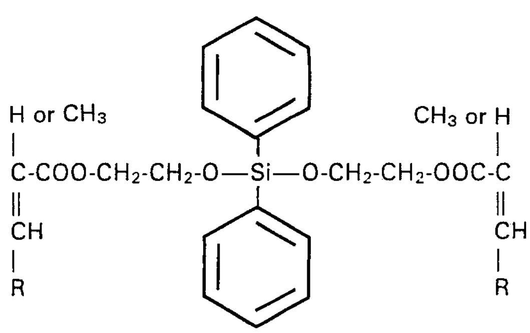

(4)

R being a hydrogen atom or methyl or ethyl radical;

C) an imidazole derivative;

D) an N,N',N''-tris(hydroxyalkyl)hexahydrotriazine.

2. Compositions according to Claim 1, characterised in that the bismaleimide of formula (1) is chosen from:

— N'N'meta-phenylene bismaleimide,
— N,N'-para-phenylene bismaleimide,
— N,N'-4,4'-diphenylmethane bismaleimide,
— N,N'-4,4'-diphenyl ether bismaleimide,
— N,N'-4,4'-diphenyl sulphone bismaleimide,
— N,N'-1,4-cyclohexylene bismaleimide,
— N,N'-4,4'-(1,1-diphenylcyclohexylidene)bismaleimide,
— N,N'-4,4'-(2,2-diphenylpropane)bismaleimide,
— N,N'-4,4'-triphenylmethane bismaleimide, and
— N,N'-6-methyl-1,3-phenylene bismaleimide.

3. Compositions according to one of Claims 1 or 2, characterised in that the organosilicon compound corresponds to the general formula (5):

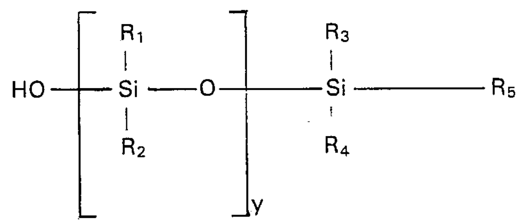

(5)

in which $R_1$, $R_2$, $R_3$, $R_4$ and $R_5$, which are identical or different, denote:

— a hydroxyl group or a group of the type $-OR_6$ in which $R_6$ may be a straight-chain or branched alkyl radical containing from 1 to 6 carbon atoms or a phenyl radical;

— a hydrogen atom;

— a straight-chain or branched alkyl radical containing from 1 to 6 carbon atoms and capable of being optionally substituted by one or more chlorine or fluorine atoms or by a -CN group;

— a straight-chain or branched alkenyl radical containing from 2 to 6 carbon atoms; or

— a phenyl radical, optionally substituted by one or more alkyl and/or alkoxy radicals containing from 1 to 4 carbon atoms, or by one or more chlorine atoms; and y is an integral or fractional number from 0 to 1000.

4. Compositions according to one of Claims 1 to 3, characterised in that the imidazole derivative corresponds to the formula (6):

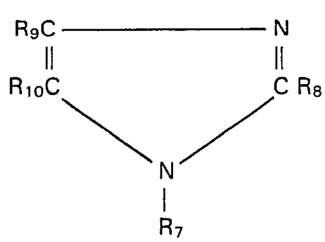

(6)

in which $R_7$, $R_8$, $R_9$ and $R_{10}$, which are identical or different, denote: a hydrogen atom, an alkyl or alkoxy radical containing from 1 to 20 carbon atoms, a vinyl radical, a phenyl radical, a nitro group, $R_9$ being capable of forming with $R_{10}$ and the carbon atoms to which these radicals are bonded a single ring such as, for example, a benzene ring, $R_7$ being also capable of denoting a carbonyl group bonded to a second imidazole ring.

5. Compositions according to one of Claims 1 to 4, characterised in that the N,N',N''-tris(hydroxyalkyl)hexahydrotriazine is chosen from:

— N,N',N''-Tris(hydroxyethyl)hexahydro-1,3,5-triazine,
— N,N',N''-tris(hydroxypropyl)hexahydro-1,3,5-triazine, and
— N,N',N''-tris(hydroxybutyl)hexahydro-1,3,5-triazine.

6. Compositions according to one of Claims 1 to 5, characterised in that the bismaleimide employed is N,N''-4,4'-diphenylmethane bismaleimide, N,N'-4-methyl-1,3-phenylenebismaleimide, N,N'-2-methyl-1,3-phenylenebismaleimide or their mixtures.

7. Compositions according to one of Claims 1 to 6, characterised in that the organosilicon compound is diphenylsilanediol.

8. Compositions according to one of Claims 1 to 7, characterised in that the imidazole derivative is chosen from the group comprising imidazole, 1-methylimidazole, 2-methylimidazole, 1,2-dimethylimidazole, 1-vinylimidazole, 1-vinyl-2-methylimidazole and benzimidazole and carbonyldiimidazole.

9. Compositions according to one of Claims 1 to 8, characterised in that they incorporate, by weight relative to the total weight of their components:

— from 60% to 80% of bismaleimide or of a bismaleimide + monomaleimide mixture;
— from 8% to 40% of an organosilicon compound of formula (5);
— from 8% to 20% of triallyl isocyanurate or of an acrylic ester of formula (4);
— from 0.02% to 1% and preferably from 0.05% to 0.5% of an imidazole derivative; and
— from 0.2 to 2% and preferably from 0.5% to 1% of a triazine compound D).

10. Process for the preparation of a composition according to Claim 1, characterised in that an intimate mixture of the compounds containing maleimide groups and the hydroxylated organosilicon compound is prepared, that the mixture is melted at a temperature not exceeding the melting point of the highest-melting maleimide, that the imidazole derivative and the triazine compound, previously dissolved in a diluent, are then added with vigorous stirring, that rapid degassing is then carried out and, lastly, that the triallyl isocyanurate or the acrylic ester of a diphenylated siloxane compound is added and the resin is cast immediately after homogenisation.

11. Process according to Claim 10, characterised in that before the intimate mixing of the compounds containing maleimide groups and the hydroxylated organosilicon compound, the latter product is heated at approximately 150°C until at least 40% of the original hydroxyl groups have disappeared.

12. Process according to Claim 10, characterised in that the imidazole derivative and the triazine compound are dissolved in the triallyl isocyanurate.

13. Shaped products obtained from compositions according to Claims 1 to 9.